# EUROPEAN PATENT APPLICATION

(11) **EP 4 557 652 A1**
(43) Date of publication of application: **21.05.2025**
(21) Application number: 23838699.9
(22) Date of filing: 28.06.2023
(51) Int. Cl.: H04L 5/00, H04W 76/14

(54) **SIDELINK COMMUNICATION INTERFACE CONTROL INFORMATION TRANSMISSION METHOD, TERMINAL, AND STORAGE MEDIUM**

(30) Priority: 13.07.2022 CN 202210827455
(71) Applicant: Datang Mobile Communications Equipment Co., Ltd., Beijing 100085 (CN)
(72) Inventor: ZHAO, Yali, Beijing 100085 (CN)
(74) Representative: Cabinet Nony
(86) International application number: PCT/CN2023/103459
(87) International publication number: WO 2024/012206

(57) **Abstract**

The present disclosure provides a method for transmitting control information through a sidelink interface through a sidelink interface, a terminal, and a storage medium, and relates to the technical field of wireless communications. The sidelink communication receiving terminal may receive configuration information transmitted from a sidelink communication transmitting terminal through the sidelink interface, and determine, for the SLRB with configured and/or activated PDCP duplication, according to the configuration information, a target RLC entity used when transmitting the PDCP control information to the sidelink communication transmitting terminal, thus, it may be ensured that the PDCP control information is transmitted to the sidelink communication transmitting terminal in time through an appropriate RLC entity, and it is ensured that a transmission path of the PDCP control information is unique in a case of the PDCP duplication when a PDCP corresponds to a plurality of RLC entities.

## Description

### CROSS-REFERENCE TO RELATED APPLICATIONS

The present disclosure claims priority to Chinese patent application No. 202210827455.5 filed on July 13, 2022 to China National Intellectual Property Administration , and entitled "METHOD FOR TRANSMITTING COTROL INFORMATION THROUGH A SIDELINK INTERFACE, TERMINAL, AND STORAGE MEDIUM", the entire content of which is incorporated herein by reference.

### TECHNICAL FIELD

The present disclosure relates to the technical field of wireless communications, in particular to a method for transmitting control information through a sidelink interface, a terminal, and a storage medium.

### BACKGROUND

With the development of a communication technology, a wireless communication may also adopt a sidelink communication in addition to a cellular network communication mode. In order to improve the reliability of data transmission through a sidelink communication link (also known as sidelink interface or bypass or PC5), a packet data convergence protocol (PDCP) duplication mechanism may be adopted at a sidelink interface.

A sidelink interface PDCP duplication was first introduced in a 3GPP long term evolution (LTE) system. For the sidelink interface of the LTE system, its sidelink communication receiving terminal does not need to transmit PDCP control information to a sidelink communication transmitting terminal because the data transmission of the sidelink interface is performed in a broadcast or multicast mode.

However, for 5th Generation (5G) new radio (NR), its sidelink interface can support unicast transmission. Therefore, in the case that the unicast transmission of the 5G NR sidelink interface uses the PDCP duplication mechanism, for a receiving terminal, a PDCP entity may correspond to a plurality of radio link control (RLC) entities (i.e., a plurality of transmission paths), and how to uniquely determine a transmission path of PDCP control information in such a case is an urgent problem to be solved.

### SUMMARY

To solve a problem existing in the prior art, an embodiment of the present disclosure provides a method for transmitting control information through a sidelink interface, a terminal, and a storage medium, which facilitates transmission of PDCP control information in a sidelink communication process.

To achieve the above objective, a technical solution of the embodiments of the present disclosure is realized in this way.

In a first aspect, an embodiment of the present disclosure provides a method for transmitting control information through a sidelink interface, applied to a sidelink communication receiving terminal, including:
receiving configuration information transmitted from a sidelink communication transmitting terminal through a sidelink interface; and
determining, for a sidelink radio bearer (SLRB) with configured and/or activated packet data convergence protocol (PDCP) duplication, according to the configuration information, a target radio link control (RLC) entity used when transmitting PDCP control information to the sidelink communication transmitting terminal.

In an optional embodiment, first indication information transmitted from the sidelink communication receiving terminal is received through the sidelink interface; the configuration information includes any of following information:
first resource set configuration information, wherein the first resource set configuration information is used to configure, for a sidelink interface target L2 destination, a sidelink interface carrier set and/or sidelink interface band width part (BWP) set to be used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set to be used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first logical channel identify (LCID) configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

In an optional embodiment, the sidelink interface target L2 destination is an target L2 destination of the sidelink communication receiving terminal.

In an optional embodiment, in the case that the configuration information includes the first resource set configuration information or the second resource set configuration information, determining, according to the configuration information, the target RLC entity used when transmitting PDCP control information to the sidelink communication transmitting terminal includes:
determining a target transmission resource according to the configuration information; wherein the target transmission resource refers to a carrier set and/or BWP set used for transmitting the PDCP control information; and
determining an LCID used when the sidelink communication transmitting terminal transmits data of the SLRB with configured and/or activated PDCP duplication utilizing the target transmission resource, and determining an RLC entity corresponding to the LCID as the target RLC entity used when the sidelink communication receiving terminal transmits the PDCP control information to the sidelink communication transmitting terminal.

In an optional embodiment, the determining a target transmission resource according to the configuration information includes:
in the case that the configuration information includes the first resource set configuration information, determining the sidelink interface carrier set and/or the sidelink interface BWP set configured for the sidelink interface target destination as the target transmission resource; or,
in the case that the configuration information includes the second resource set configuration information, determining the sidelink interface carrier set and/or the sidelink interface BWP set configured for the SLRB belonging to the sidelink interface target L2 destination as the target transmission resource.

In an optional embodiment, in the case that the configuration information is the third resource set configuration information, the method further includes: stipulating, by a protocol, that the PDCP control information is transmitted through the primary path or the secondary path for the SLRB with configured and/or activated PDCP duplication.

In an optional embodiment, in the case that the configuration information includes the third resource set configuration information, and it is stipulated, by the protocol, that the PDCP control information is transmitted through the primary path for the SLRB with configured and/or activated PDCP duplication, determining, according to the configuration information, the target RLC entity used when transmitting PDCP control information to the sidelink communication transmitting terminal includes:
determining a sidelink interface carrier set and/or sidelink interface BWP set corresponding to the primary path according to the third resource set configuration information; and
determining an LCID used when the sidelink communication transmitting terminal transmits data of the SLRB with configured and/or activated PDCP duplication utilizing the sidelink interface carrier set and/or the sidelink interface BWP set corresponding to the primary path, and determining an RLC entity corresponding to the LCID as the target RLC entity used when the sidelink communication receiving terminal transmits the PDCP control information to the sidelink communication transmitting terminal.

In an optional embodiment, in the case that the configuration information includes the third resource set configuration information, and it is stipulated, by the protocol, that the PDCP control information is transmitted through the secondary path for the SLRB with configured and/or activated PDCP duplication, determining, according to the configuration information, the target RLC entity used when transmitting PDCP control information to the sidelink communication transmitting terminal includes:
determining a sidelink interface carrier set and/or sidelink interface BWP set corresponding to the secondary path according to the third resource set configuration information; and
determining an LCID used when the sidelink communication transmitting terminal transmits data of the SLRB with configured and/or activated PDCP duplication utilizing the sidelink interface carrier set and/or the sidelink interface BWP set corresponding to the secondary path, and determining an RLC entity corresponding to the LCID as the target RLC entity used when the sidelink communication receiving terminal transmits the PDCP control information to the sidelink communication transmitting terminal.

In an optional embodiment, in the case that the configuration information includes the first LCID configuration information, determining, according to the configuration information, the target RLC entity used when transmitting PDCP control information to the sidelink communication transmitting terminal includes:
determining an RLC entity corresponding to an LCID contained in the first LCID configuration information as the target RLC entity used when the sidelink communication receiving terminal transmits the PDCP control information to the sidelink communication transmitting terminal.

In an optional embodiment, in the case that the configuration information includes the second LCID configuration information, determining, according to the configuration information, a target RLC entity used for transmitting first PDCP control information to the transmitting terminal includes:
determining an RLC entity corresponding to an LCID contained in the second LCID configuration information as the target RLC entity used when the sidelink communication receiving terminal transmits the PDCP control information to the sidelink communication transmitting terminal; or,
determining a set of LCIDs used by all transmission paths for PDCP duplication according to a correlation between the LCIDs used by each transmission path used by the sidelink interface for the PDCP duplication, and the LCID indicated in the second LCID configuration information; and selecting an LCID from the set of LCIDs according to a preset rule, and determining an RLC entity corresponding to the selected LCID as the target RLC entity used when the sidelink communication receiving terminal transmits the PDCP control information to the sidelink communication transmitting terminal.

In an optional embodiment, the correlation between the LCIDs used by each transmission path used by the sidelink interface for the PDCP duplication is stipulated by a protocol, pre-configured or configured by the network for the sidelink communication receiving terminal.

In an optional embodiment, the preset rule includes any one of the following:
random selection;
selecting an LCID with a largest or smallest number according to a number of each LCID;
selecting an LCID corresponding to the primary path; and
selecting an LCID corresponding to the secondary path.

In a second aspect, an embodiment of the present disclosure provides a method for transmitting control information through a sidelink interface through a sidelink interface, applied to a sidelink communication transmitting terminal, including:
transmitting configuration information to a sidelink communication receiving terminal through the sidelink interface; wherein the configuration information is used to assist the sidelink communication receiving terminal to determine a target radio link control (RLC) entity used when transmitting PDCP control information to the sidelink communication transmitting terminal for a sidelink radio bearer (SLRB) with configured and/or activated PDCP duplication.

In an optional embodiment, the configuration information includes any of following information:
first resource set configuration information, wherein the first resource set configuration information is used to configure, for a sidelink interface target L2 destination, a sidelink interface carrier set and/or sidelink interface band width part (BWP) set to be used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set to be used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first LCID configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

In an optional embodiment, the sidelink interface target L2 destination is an target L2 destination of the sidelink communication receiving terminal.

In an optional embodiment, after transmitting configuration information to a sidelink communication receiving terminal through the sidelink interface, the method further includes:
receiving PDCP control information transmitted from the sidelink communication receiving terminal using the target RLC entity.

In a third aspect, an embodiment of the present disclosure provides a terminal, the terminal is a sidelink communication receiving terminal, and the terminal includes:
an information receiving unit, configured to receive configuration information transmitted from a sidelink communication transmitting terminal through a sidelink interface; and
a resource determining unit, configured to determine, for a sidelink radio bearer (SLRB) with configured and/or activated packet data convergence protocol (PDCP) duplication, according to the configuration information, a target radio link control (RLC) entity used when transmitting PDCP control information to the sidelink communication transmitting terminal.

In a fourth aspect, an embodiment of the present disclosure provides a terminal, the terminal is a sidelink communication transmitting terminal, and the terminal includes:
an information transmitting unit, configured to transmit configuration information to a sidelink communication receiving terminal through a sidelink interface; wherein the configuration information is used to assist the sidelink communication receiving terminal to determine a target radio link control (RLC) entity used when transmitting PDCP control information to the sidelink communication transmitting terminal for a sidelink radio bearer (SLRB) with configured and/or activated PDCP duplication.

In a fifth aspect, an embodiment of the present disclosure provides a terminal, the terminal is a sidelink communication receiving terminal, and the terminal includes: a memory, a transceiver, and a processor;
the memory is configured to store a computer instruction;
the transceiver is configured to receive and transmit data under control of the processor; and
the processor is configured to read a computer program in the memory and execute following operations:
   controlling the transceiver to receive configuration information transmitted from a sidelink communication transmitting terminal through a sidelink interface; and
   determining, for a sidelink radio bearer (SLRB) with configured and/or activated packet data convergence protocol (PDCP) duplication, according to the configuration information, a target radio link control (RLC) entity used when transmitting PDCP control information to the sidelink communication transmitting terminal.

In an optional embodiment, the configuration information includes any of following information:
first resource set configuration information, wherein the first resource set configuration information is used to configure, for a sidelink interface target L2 destination, a sidelink interface carrier set and/or sidelink interface band width part (BWP) set to be used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set to be used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first logical channel identify (LCID) configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

In an optional embodiment, the sidelink interface target L2 destination is an target L2 destination of the sidelink communication receiving terminal.

In an optional embodiment, in the case thatthe configuration information includes the first resource set configuration information or the second resource set configuration information, the processor is specifically configured to:
determine a target transmission resource according to the configuration information; wherein the target transmission resource refers to a carrier set and/or BWP set used for transmitting the PDCP control information; and
determine an LCID used when the sidelink communication transmitting terminal transmits data of the SLRB with configured and/or activated PDCP duplication utilizing the target transmission resource, and determine an RLC entity corresponding to the LCID as the target RLC entity used when the sidelink communication receiving terminal transmits the PDCP control information to the sidelink communication transmitting terminal.

In an optional embodiment, the processor is specifically configured to:
use, in the case that the configuration information includes the first resource set configuration information, the sidelink interface carrier set and/or the sidelink interface BWP set configured for the sidelink interface target destination as the target transmission resource; or,
use, in the case thatthe configuration information includes the second resource set configuration information, the sidelink interface carrier set and/or the sidelink interface BWP set configured for the SLRB belonging to the sidelink interface target L2 destination as the target transmission resource.

In an optional embodiment, in the case that the configuration information is the third resource set configuration information, the terminal further includes: stipulating, by a protocol, that the PDCP control information is transmitted through the primary path or the secondary path for the SLRB with configured and/or activated PDCP duplication.

In an optional embodiment, in the case that the configuration information includes the third resource set configuration information, and it is stipulated, by the protocol, that the PDCP control information is transmitted through the primary path for the SLRB with configured and/or activated PDCP duplication, the processor is specifically configured to:
determine a sidelink interface carrier set and/or sidelink interface BWP set corresponding to the primary path according to the third resource set configuration information; and
determine an LCID used when the sidelink communication transmitting terminal transmits data of the SLRB with configured and/or activated PDCP duplication utilizing the sidelink interface carrier set and/or the sidelink interface BWP set corresponding to the primary path, and determine an RLC entity corresponding to the LCID as the target RLC entity used when the sidelink communication receiving terminal transmits the PDCP control information to the sidelink communication transmitting terminal.

In an optional embodiment, in the case that the configuration information includes the third resource set configuration information, and it is stipulated, by the protocol, that the PDCP control information is transmitted through the secondary path for the SLRB with configured and/or activated PDCP duplication, the processor is specifically configured to:
determine a sidelink interface carrier set and/or sidelink interface BWP set corresponding to the secondary path according to the third resource set configuration information; and
determine an LCID used when the sidelink communication transmitting terminal transmits data of the SLRB with configured and/or activated PDCP duplication utilizing the sidelink interface carrier set and/or the sidelink interface BWP set corresponding to the secondary path, and determine an RLC entity corresponding to the LCID as the target RLC entity used when the sidelink communication receiving terminal transmits the PDCP control information to the sidelink communication transmitting terminal.

In an optional embodiment, in the case that the configuration information includes the first LCID configuration information, the processor is specifically configured to:
determine an RLC entity corresponding to an LCID contained in the first LCID configuration information as the target RLC entity used when the sidelink communication receiving terminal transmits the PDCP control information to the sidelink communication transmitting terminal.

In an optional embodiment, in the case that the configuration information includes the second LCID configuration information, the processor is specifically configured to:
determine an RLC entity corresponding to an LCID contained in the second LCID configuration information as the target RLC entity used when the sidelink communication receiving terminal transmits the PDCP control information to the sidelink communication transmitting terminal; or,
determine a set of LCIDs used by all transmission paths for PDCP duplication according to a correlation between the LCIDs used by each transmission path used by the sidelink interface for the PDCP duplication, and the LCID indicated in the second LCID configuration information; and select an LCID from the set of LCIDs according to a preset rule, and determine an RLC entity corresponding to the selected LCID as the target RLC entity used when the sidelink communication receiving terminal transmits the PDCP control information to the sidelink communication transmitting terminal.

In an optional embodiment, the correlation between the LCIDs used by each transmission path used by the sidelink interface for the PDCP duplication is stipulated by a protocol, pre-configured or configured by the network for the sidelink communication receiving terminal.

In an optional embodiment, the preset rule includes any one of the following:
random selection;
selecting an LCID with a largest or smallest number according to a number of each LCID;
selecting an LCID corresponding to the primary path; and
selecting an LCID corresponding to the secondary path.

In a sixth aspect, an embodiment of the present disclosure provides a terminal, the terminal is a sidelink communication transmitting terminal, and the terminal includes: a memory, a transceiver, and a processor;
the memory is configured to store a computer instruction;
the transceiver is configured to receive and transmit data under control of the processor; and
the processor is configured to read a computer program in the memory and execute following operations:
controlling the transceiver to transmit configuration information to a sidelink communication receiving terminal through a sidelink interface; wherein the configuration information is used to assist the sidelink communication receiving terminal to determine a target radio link control (RLC) entity used when transmitting PDCP control information to the sidelink communication transmitting terminal for a sidelink radio bearer (SLRB) with configured and/or activated PDCP duplication.

In an optional embodiment, the processor is further configured to:
receive PDCP control information transmitted from the sidelink communication receiving terminal using the target RLC entity after transmitting the configuration information to the sidelink communication receiving terminal through the sidelink interface.

In a seventh aspect, an embodiment of the present disclosure provides a computer readable storage medium, storing a computer instruction, and the computer instruction, when executed by a processor, implements the method according to any one of the first aspect or second aspect.

The method for transmitting the control information through the sidelink interface, the terminal, and the storage medium provided by the embodiments of the present disclosure at least have following technical effects:
the sidelink communication receiving terminal may receive the configuration information transmitted from the sidelink communication transmitting terminal through the sidelink interface, and determine, for the SLRB with configured and/or activated PDCP duplication, according to the configuration information, the target RLC entity used when transmitting the PDCP control information to the sidelink communication transmitting terminal, thus, it may be ensured that the PDCP control information is transmitted to the sidelink communication transmitting terminal in time through an appropriate RLC entity, and it is ensured that the transmission path of the PDCP control information is unique in a case of the PDCP duplication when a PDCP corresponds to a plurality of RLC entities.

### BRIEF DESCRIPTION OF DRAWINGS

In order to more clearly describe technical solutions in embodiments of the present disclosure or in the related art, the accompanying drawings needed by the description in the embodiments or in the related art will be briefly introduced below. Apparently, the accompanying drawings in the following description are only some embodiments of the present disclosure. Those ordinarily skilled in the art may also obtain other accompanying drawings according to these accompanying drawings without making creative work.

### DETAILED DESCRIPTION

In order to explain technical solutions in embodiments of the present disclosure or the related art more clearly, the following will briefly introduce accompanying drawings that need to be used in the description of the embodiments or the prior art. Apparently, the accompanying drawings in the following description are only some embodiments of the present disclosure, and for those of ordinary skill in the art, on the premise of no creative work, other accompanying drawings may further be obtained from these accompanying drawings.
FIG. 1 is a schematic structural diagram of a communication system to which an embodiment of the present disclosure is applicable.
FIG. 2 is a schematic diagram of performing data transmission through a PDCP duplication mechanism.
FIG. 3 is an interaction flowchart of a method for transmitting control information through a sidelink interface through a sidelink interface provided by an embodiment of the present disclosure.
FIG. 4 is an interaction flowchart of another method for transmitting control information through a sidelink interface through a sidelink interface provided by an embodiment of the present disclosure.
FIG. 5 is an interaction flowchart of another method for transmitting control information through a sidelink interface through a sidelink interface provided by an embodiment of the present disclosure.
FIG. 6 is an interaction flowchart of another method for transmitting control information through a sidelink interface through a sidelink interface provided by an embodiment of the present disclosure.
FIG. 7 is an interaction flowchart of another method for transmitting control information through a sidelink interface through a sidelink interface provided by an embodiment of the present disclosure.
FIG. 8 is an interaction flowchart of another method for transmitting control information through a sidelink interface through a sidelink interface provided by an embodiment of the present disclosure.
FIG. 9 is an interaction flowchart of another method for transmitting control information through a sidelink interface through a sidelink interface provided by an embodiment of the present disclosure.
FIG. 10 is a flowchart of a method for transmitting control information through a sidelink interface through a sidelink interface provided by an embodiment of the present disclosure.
FIG. 11 is a structural block diagram of a terminal provided by an embodiment of the present disclosure.
FIG. 12 is a schematic structural diagram of a terminal provided by an embodiment of the present disclosure.

### DETAILED DESCRIPTION

Specific implementations of the present disclosure are described in detail below in conjunction with accompanying drawings. It should be understood that the specific implementations described herein are only used to illustrate and explain the present disclosure and are not used to limit the present disclosure.

It needs to be noted that "first" and "second" in the embodiments of the present disclosure are used to distinguish similar objects, and are not used to describe a specific order or sequence. "And/or" in the embodiments of the present disclosure describe a correlation of associated objects, which means that there may be three kinds of relationships, for example, A and/or B may mean that there are three kinds of situations: A alone, A and B at the same time, and B alone. A character "/" universally indicates that front and back associated objects are in an "or" relationship.

A network architecture and business scenarios described in the embodiments of the present disclosure are to more clearly illustrate the technical solutions of the embodiments of the present disclosure, and do not constitute a limitation on the technical solutions provided by the embodiments of the present disclosure. It may be known to those of ordinary skill in the art that with the evolution of the network architecture and the emergence of new business scenarios, the technical solutions provided by the embodiments of the present disclosure are suitable for similar technical problems.

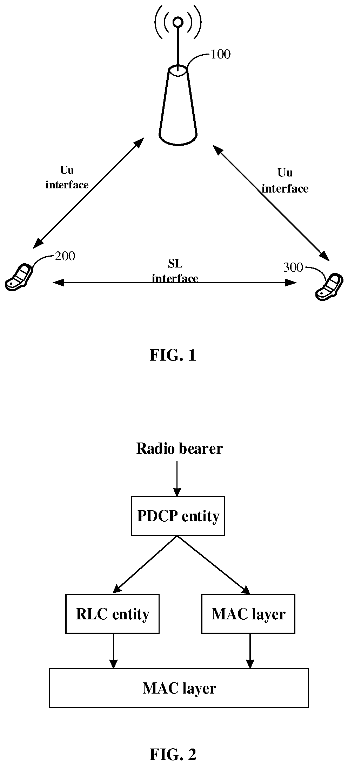

FIG. 1 is a schematic structural diagram of a communication system applicable to embodiments of the present disclosure. As shown in FIG. 1, the communication system includes a network device 100 and a plurality of terminals, two terminals are taken as examples for illustration in FIG. 1, and the two terminals are a first terminal 200 and a second terminal 300 respectively. The terminals and the network device 100 may communicate through Uu interfaces, i.e., uplink and downlink data or control information is transmitted through the Uu interfaces. The Uu interfaces are wireless communication interfaces between the terminals and the network device, and the terminals may access a fixed network portion of a mobile communication system through the Uu interfaces.

The first terminal 200 and the second terminal 300 may communicate directly through a sidelink interface (SL) interface. A sidelink communication is a mode in which neighboring terminals may transmit data through an SL within a close range. A wireless interface corresponding to the SL may be referred to as a sidelink interface, also referred to as a sidelink interface or an SL interface or a PC5 interface. Exemplarily, a unicast communication may be performed between the first terminal 200 and the second terminal 300 through the SL interface. For example, the first terminal 200 may be used as a sidelink communication transmitting terminal, and the second terminal 300 may be used as a sidelink communication receiving terminal.

The network device 100 may be a device that provides a wireless communication function for the terminals, including but not limited to: a next generation Node B (gNB) in 5G, a distribute unit (DU), a central unit (CU), a radio network controller (RNC), a Node B (NB), a base station controller (BSC), a base transceiver station (BTS), an HNB (e.g., home evolved NodeB, or home Node B), a baseband unit (BBU), a transmitting and receiving point (TRP), a transmitting point (TP), a mobile switching center, etc. The network device 100 may further be a device providing a wireless communication function for a terminal in other communication systems that may appear in the future.

A terminal may be a device with a wireless communication function, and may also be referred to as user equipment (UE). Exemplarily, the terminal may be a mobile phone, an ipad, a computer with a wireless transceiving function, a virtual reality (VR) terminal, an augmented reality (AR) terminal, a wireless terminal in industrial control, etc. Both the first terminal 200 and the second terminal 300 shown in FIG. 1 may provide voice and/or data connectivity to a user, have a wireless connection function, and may be connected to a wireless modem, etc. The first terminal 200 and the second terminal 300 may communicate with one or more core networks via the network device 100.

In order to meet requirements of high reliability and low latency services for the sidelink interface, a PDCP duplication mechanism for the sidelink interface is introduced. As shown in FIG. 2, in the PDCP duplication mechanism, a radio bearer (corresponding to a PDCP entity) of a PDCP layer performs transmission through a plurality of logical channels respectively at a radio link control (RLC) layer, and each logical channel corresponds to an RLC entity. In pre-configured information or configuration information of network, two corresponding SL carrier sets may be configured for a sidelink interface target destination. After PDCP duplication is activated, for the same sidelink radio bearer (SLRB), its two corresponding RLC channels select carriers to transmit data from the above two SL carrier sets respectively, and the data is delivered to a bottom layer, i.e., an MAC layer, to be transmitted.

In order to improve reliability of data transmission through the SL interface, PDCP may be adopted. In a 5G NR communication technology, a radio transmission technology supports the unicast communication, and in a case of the unicast communication, how to complete transmission of PDCP control information between the sidelink communication receiving terminal and the sidelink communication transmitting terminal is an urgent problem to be solved.

Based on this, an embodiment of the present disclosure provides a method for transmitting control information through a sidelink interface, a terminal, and a storage medium. After the unicast communication uses PDCP duplication, the sidelink communication receiving terminal may receive configuration information transmitted from the sidelink communication transmitting terminal through the sidelink interface, and determine, for the SLRB with configured and/or activated PDCP duplication, according to the configuration information, a target radio link control (RLC) entity used when transmitting the PDCP control information to the sidelink communication transmitting terminal. Thus, it may be ensured that the PDCP control information is transmitted to the sidelink communication transmitting terminal in time through an appropriate RLC entity, and it is ensured that the transmission path of the PDCP control information is unique in a case of the PDCP duplication when a PDCP corresponds to a plurality of RLC entities.

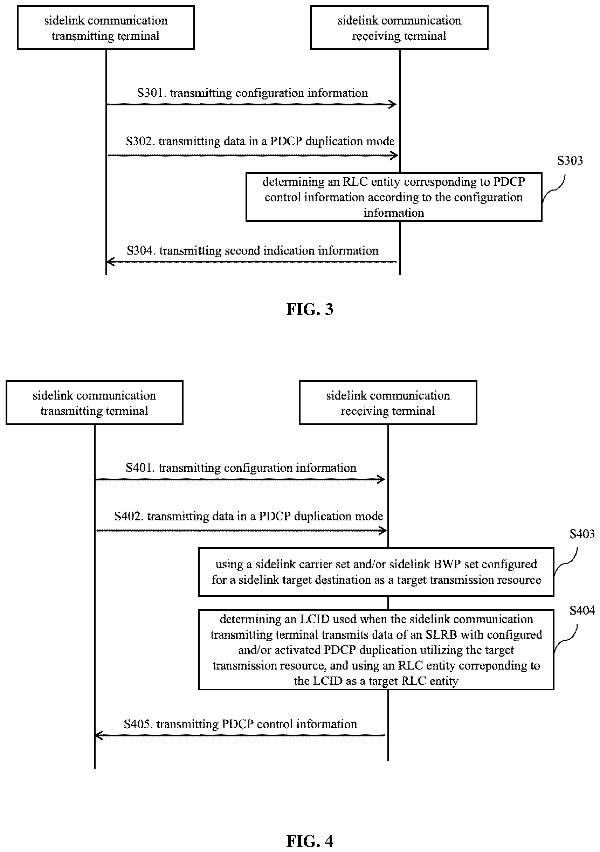

FIG. 3 shows an interaction flowchart of a method for transmitting control information through a sidelink interface provided by an embodiment of the present disclosure. As shown in FIG. 3, the method may include the following steps.

Step S301: the sidelink communication transmitting terminal transmits configuration information to the sidelink communication receiving terminal.

The sidelink communication transmitting terminal transmits the configuration information to the sidelink communication receiving terminal through the sidelink interface. The configuration information is used to assist the sidelink communication receiving terminal to determine the target radio link control (RLC) entity used when transmitting the PDCP control information to the sidelink communication transmitting terminal for a sidelink radio bearer (SLRB) with configured and/or activated PDCP duplication. The configuration information includes any of following information:
first resource set configuration information, wherein the first resource set configuration information is used to configure, for a sidelink interface Layer2 (L2) target destination, a sidelink interface carrier set and/or sidelink interface band width part (BWP) set to be used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set to be used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first logical channel identify (LCID) configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

The sidelink interface target L2 destination may be an target L2 destination of the sidelink communication receiving terminal.

Step S302: the sidelink communication transmitting terminal transmits data to the sidelink communication receiving terminal in a PDCP duplication mode.

For the SLRB that uses the PDCP duplication, data of its corresponding different RLC entities are transmitted through different sidelink interface carriers and/or BWPs respectively. Specifically, the sidelink interface transmitting terminal may divide the sidelink interface carriers and/or BWPs into groups with the same number as the number of duplication paths based on its own implementation or network configuration. Taking a division into two groups as an example, for the SLRB with activated PDCP duplication, one of RLC logical channels uses one group of sidelink interface carrier and/or BWP sets; and the other of the RLC logical channels uses the other group of the sidelink interface carrier and/or BWP sets. A mapping relationship between the sidelink interface carriers and/or BWPs used by the RLC logical channel and the RLC logical channel is not fixed and may be selected by the transmitting terminal itself.

Step S303, the sidelink communication receiving terminal determines an RLC entity corresponding to the PDCP control information according to the configuration information.

The sidelink communication receiving terminal receives the configuration information transmitted from the sidelink communication transmitting terminal through the sidelink interface. for the SLRB with configured and/or activated PDCP duplication, the sidelink communication receiving terminal may determine, according different contents of the configuration information, the target RLC entity used when transmitting the PDCP control information to the sidelink communication transmitting terminal in different modes.

Step S304: the sidelink communication receiving terminal transmits the PDCP control information to the sidelink communication transmitting terminal through the target RLC entity.

The sidelink communication transmitting terminal receives the PDCP control information transmitted from the sidelink communication receiving terminal through the target RLC entity.

The PDCP control information may include, but is not limited to, a PDCP status report and/or robust header compression (ROHC) feedback information.

The following respectively illustrates the specific execution process of the method for transmitting the sidelink interface control information through multiple embodiments. In some embodiments, as shown in FIG. 4, the method may include the following steps.

Step S401: the sidelink communication transmitting terminal transmits configuration information to the sidelink communication receiving terminal.

The configuration information is used to assist the sidelink communication receiving terminal to determine the target RLC entity used when transmitting the PDCP control information to the sidelink communication transmitting terminal for the SLRB with configured and/or activated PDCP duplication.

In some embodiments, the configuration information may include first resource set configuration information. The first resource set configuration information is used to configure, for a sidelink interface target L2 destination, a sidelink interface carrier set and/or BWP set to be used when the sidelink communication receiving terminal transmits the PDCP control information to the sidelink communication transmitting terminal.

Step S402: the sidelink communication transmitting terminal transmits data to the sidelink communication receiving terminal in a PDCP duplication mode.

For the SLRB that uses the PDCP duplication, data of its corresponding different RLC entities are transmitted through different sidelink interface carriers and/or BWPs respectively. Specifically, the sidelink interface transmitting terminal may divide the sidelink interface carriers and/or BWPs into groups with the same number as the number of PDCP duplication transmission paths based on its own implementation or network configuration. Taking a division into two groups as an example, for the SLRB with activated the PDCP duplication, one of RLC logical channels uses one group of sidelink interface carriers and/or BWP sets; and the other of the RLC logical channels uses the other group of the sidelink interface carriers and/or BWP sets. A mapping relationship between the sidelink interface carriers and/or BWPs used by the RLC logical channel and the RLC logical channel is not fixed and may be selected by the transmitting terminal itself.

Step S403, the sidelink communication receiving terminal uses the sidelink interface carrier set and/or the sidelink interface BWP set configured for the sidelink interface target destination as a target transmission resource.

The target transmission resource refers to a carrier set and/or BWP set used for transmitting the PDCP control information.

Step S404, the sidelink communication receiving terminal determines an LCID used when the sidelink communication transmitting terminal transmits data of the SLRB with configured and/or activated PDCP duplication utilizing the target transmission resource, and uses an RLC entity corresponding to the LCID as the target RLC entity.

The target RLC entity refers to the RLC entity used when the sidelink communication receiving terminal transmits the PDCP control information to the sidelink communication transmitting terminal.

Step S405, the sidelink communication receiving terminal transmits the PDCP control information to the sidelink communication transmitting terminal through the target RLC entity.

The sidelink communication receiving terminal delivers the PDCP control information to the target RLC entity and further delivers it to a bottom layer for data transmitting. The sidelink communication transmitting terminal receives the PDCP control information from the sidelink interface.

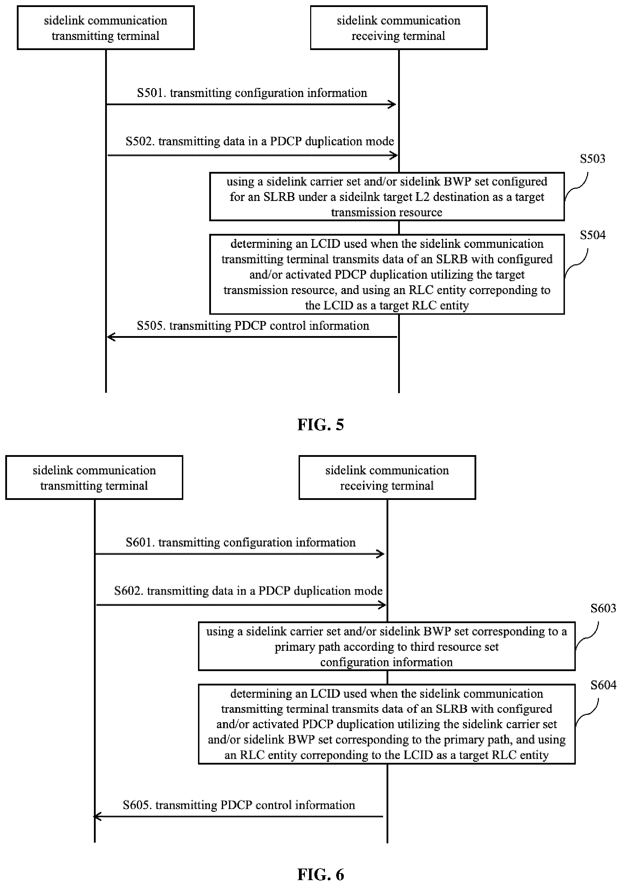

In some other embodiments, as shown in FIG. 5, the method may include the following steps.

Step S501: the sidelink communication transmitting terminal transmits configuration information to the sidelink communication receiving terminal.

The configuration information is used to assist the sidelink communication receiving terminal to determine the target RLC entity used when transmitting the PDCP control information to the sidelink communication transmitting terminal for the SLRB with configured and/or activated PDCP duplication.

In some embodiments, the configuration information may include second resource set configuration information. The second resource set configuration information is used to configure, for an SLRB belonging to the sidelink interface target L2 destination, a sidelink interface carrier set and/or sidelink interface BWP set to be used when the sidelink communication receiving terminal transmits PDCP control information corresponding to the SLRB to the sidelink communication transmitting terminal.

Step S502: the sidelink communication transmitting terminal transmits data to the sidelink communication receiving terminal in a PDCP duplication mode.

For the SLRB that uses the PDCP duplication, data of its corresponding different RLC entities are transmitted through different sidelink interface carriers and/or BWPs respectively. Specifically, the sidelink interface transmitting terminal may divide the sidelink interface carriers and/or BWPs into groups with the same number as the number of PDCP duplication transmission paths based on its own implementation or network configuration. Taking a division into two groups as an example, for the SLRB with activated the PDCP duplication, one of RLC logical channels uses one group of sidelink interface carriers and/or BWP sets; and the other of the RLC logical channels uses the other group of the sidelink interface carriers and/or BWP sets. A mapping relationship between the sidelink interface carriers and/or BWPs used by the RLC logical channel and the RLC logical channel is not fixed and may be selected by the transmitting terminal itself.

Step S503, the sidelink communication receiving terminal uses the sidelink interface carrier set and/or the sidelink interface BWP set configured for the SLRB belonging to the sidelink interface target L2 destination as the target transmission resource.

The target transmission resource refers to a carrier set and/or BWP set used for transmitting the PDCP control information.

Step S504, the sidelink communication receiving terminal determines an LCID used when the sidelink communication transmitting terminal transmits data of the SLRB with configured and/or activated PDCP duplication utilizing the target transmission resource, and takes an RLC entity corresponding to the LCID as the target RLC entity.

The target RLC entity refers to the RLC entity used when the sidelink communication receiving terminal transmits the PDCP control information to the sidelink communication transmitting terminal.

Step S505, the sidelink communication receiving terminal transmits the PDCP control information to the sidelink communication transmitting terminal through the target RLC entity.

The sidelink communication receiving terminal delivers the PDCP control information to the target RLC entity and further delivers it to a bottom layer for data transmitting. The sidelink communication transmitting terminal receives the PDCP control information from the sidelink interface.

In some other embodiments, as shown in FIG. 6, the method may include the following steps.

Step S601: the sidelink communication transmitting terminal transmits configuration information to the sidelink communication receiving terminal.

The configuration information is used to assist the sidelink communication receiving terminal to determine the target RLC entity used when transmitting the PDCP control information to the sidelink communication transmitting terminal for the SLRB with configured and/or activated PDCP duplication.

In some embodiments, the configuration information may include the third resource set configuration information. The third resource set configuration information is used to configure, for the sidelink interface target L2 destination, a sidelink interface carrier set and/or sidelink interface BWP set used by a primary path and/or a secondary path corresponding to the PDCP duplication;

When the configuration information is the third resource set configuration information, and it is stipulated, by the protocol, that the PDCP control information is transmitted through the primary path or the secondary path for the SLRB with configured and/or activated PDCP duplication,

Step S602: the sidelink communication transmitting terminal transmits data to the sidelink communication receiving terminal in a PDCP duplication mode.

For the SLRB that uses the PDCP duplication, data of its corresponding different RLC entities are transmitted through different sidelink interface carriers and/or BWPs respectively. Specifically, the sidelink interface transmitting terminal may divide the sidelink interface carriers and/or BWPs into groups with the same number as the number of PDCP duplication transmission paths based on its own implementation or network configuration. Taking a division into two groups as an example, for the SLRB with activated the PDCP duplication, one of RLC logical channels uses one group of sidelink interface carriers and/or BWP sets; and the other of the RLC logical channels uses the other group of the sidelink interface carriers and/or BWP sets. A mapping relationship between the sidelink interface carriers and/or BWPs used by the RLC logical channel and the RLC logical channel is not fixed and may be selected by the transmitting terminal itself.

Step S603, the sidelink communication receiving terminal determines a sidelink interface carrier set and/or sidelink interface BWP set corresponding to the primary path according to the third resource set configuration information.

In the case that the configuration information includes the third resource set configuration information, and it is stipulated, by the protocol, that the PDCP control information is transmitted through the primary path for the SLRB with configured and/or activated PDCP duplication, the sidelink communication receiving terminal determines a sidelink interface carrier set and/or sidelink interface BWP set corresponding to the primary path according to the third resource set configuration information.

Step S604, the sidelink communication receiving terminal determines an LCID used when the sidelink communication transmitting terminal transmits data of the SLRB with configured and/or activated PDCP duplication utilizing the sidelink interface carrier set and/or the sidelink interface BWP set corresponding to the primary path, and uses an RLC entity corresponding to the LCID as the target RLC entity.

The target RLC entity refers to the RLC entity used when the sidelink communication receiving terminal transmits the PDCP control information to the sidelink communication transmitting terminal.

Step S605, the sidelink communication receiving terminal transmits PDCP control information to the sidelink communication transmitting terminal through the target RLC entity.

The sidelink communication receiving terminal delivers the PDCP control information to the target RLC entity and further delivers it to a bottom layer for data transmitting. The sidelink communication transmitting terminal receives the PDCP control information from the sidelink interface.

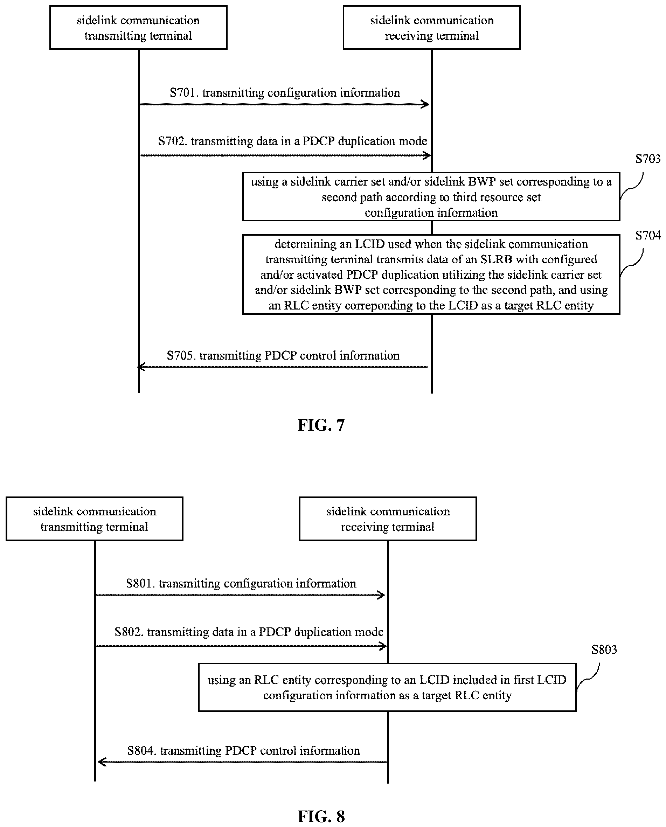

In some other embodiments, as shown in FIG. 7, the method may include the following steps.

Step S701: the sidelink communication transmitting terminal transmits configuration information to the sidelink communication receiving terminal.

The configuration information is used to assist the sidelink communication receiving terminal to determine the target RLC entity used when transmitting the PDCP control information to the sidelink communication transmitting terminal for the SLRB with configured and/or activated PDCP duplication.

In some embodiments, the configuration information may include the third resource set configuration information. The third resource set configuration information is used to configure, for the sidelink interface target L2 destination, a sidelink interface carrier set and/or sidelink interface BWP set used by a primary path and/or a secondary path corresponding to the PDCP duplication;

When the configuration information is the third resource set configuration information, and it is stipulated, by the protocol, that the PDCP control information is transmitted through the primary path or the secondary path for the SLRB with configured and/or activated PDCP duplication,

Step S702: the sidelink communication transmitting terminal transmits data to the sidelink communication receiving terminal in a PDCP duplication mode.

For the SLRB that uses the PDCP duplication, data of its corresponding different RLC entities are transmitted through different sidelink interface carriers and/or BWPs respectively. Specifically, the sidelink interface transmitting terminal may divide the sidelink interface carriers and/or BWPs into groups with the same number as the number of PDCP duplication transmission paths based on its own implementation or network configuration. Taking a division into two groups as an example, for the SLRB with activated the PDCP duplication, one of RLC logical channels uses one group of sidelink interface carriers and/or BWP sets; and the other of the RLC logical channels uses the other group of the sidelink interface carriers and/or BWP sets. A mapping relationship between the sidelink interface carriers and/or BWPs used by the RLC logical channel and the RLC logical channel is not fixed and may be selected by the transmitting terminal itself.

Step S703, the sidelink communication receiving terminal determines a sidelink interface carrier set and/or sidelink interface BWP set corresponding to the secondary path according to the third resource set configuration information.

In the case that the configuration information includes the third resource set configuration information, and it is stipulated, by the protocol, that the PDCP control information is transmitted through the secondary path for the SLRB with configured and/or activated PDCP duplication, the sidelink communication receiving terminal determines a sidelink interface carrier set and/or sidelink interface BWP set corresponding to the secondary path according to the third resource set configuration information.

Step S704, the sidelink communication receiving terminal determines an LCID used when the sidelink communication transmitting terminal transmits data of the SLRB with configured and/or activated PDCP duplication utilizing the sidelink interface carrier set and/or the sidelink interface BWP set corresponding to the secondary path, and uses an RLC entity corresponding to the LCID as a target RLC entity.

The target RLC entity refers to the RLC entity used when the sidelink communication receiving terminal transmits the PDCP control information to the sidelink communication transmitting terminal.

Step S705, the sidelink communication receiving terminal transmits PDCP control information to the sidelink communication transmitting terminal through the target RLC entity.

The sidelink communication receiving terminal delivers the PDCP control information to the target RLC entity and further delivers it to a bottom layer for data transmitting. The sidelink communication transmitting terminal receives the PDCP control information from the sidelink interface.

In some other embodiments, as shown in FIG. 8 which is an interaction flowchart of another method for transmitting control information through a sidelink interface through a sidelink interface provided by an embodiment of the present disclosure, the method may include the following steps.

Step S801: the sidelink communication transmitting terminal transmits configuration information to the sidelink communication receiving terminal.

The configuration information is used to assist the sidelink communication receiving terminal to determine the target RLC entity used when transmitting the PDCP control information to the sidelink communication transmitting terminal for the SLRB with configured and/or activated PDCP duplication.

In some embodiments, the configuration information may include first LCID configuration information. The first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal.

Step S802: the sidelink communication transmitting terminal transmits data to the sidelink communication receiving terminal in a PDCP duplication mode.

For the SLRB that uses the PDCP duplication, data of its corresponding different RLC entities are transmitted through different sidelink interface carriers and/or BWPs respectively. Specifically, the sidelink interface transmitting terminal may divide the sidelink interface carriers and/or BWPs into groups with the same number as the number of PDCP duplication transmission paths based on its own implementation or network configuration. Taking a division into two groups as an example, for the SLRB with activated the PDCP duplication, one of RLC logical channels uses one group of sidelink interface carriers and/or BWP sets; and the other of the RLC logical channels uses the other group of the sidelink interface carriers and/or BWP sets. A mapping relationship between the sidelink interface carriers and/or BWPs used by the RLC logical channel and the RLC logical channel is not fixed and may be selected by the transmitting terminal itself.

Step S803, the sidelink communication receiving terminal uses an RLC entity corresponding to an LCID contained in the first LCID configuration information as a target RLC entity.

The target RLC entity refers to the RLC entity used when the sidelink communication receiving terminal transmits the PDCP control information to the sidelink communication transmitting terminal.

Step S804, the sidelink communication receiving terminal transmits PDCP control information to the sidelink communication transmitting terminal through the target RLC entity.

The sidelink communication receiving terminal delivers the PDCP control information to the target RLC entity and further delivers it to a bottom layer for data transmitting. The sidelink communication transmitting terminal receives the PDCP control information from the sidelink interface.

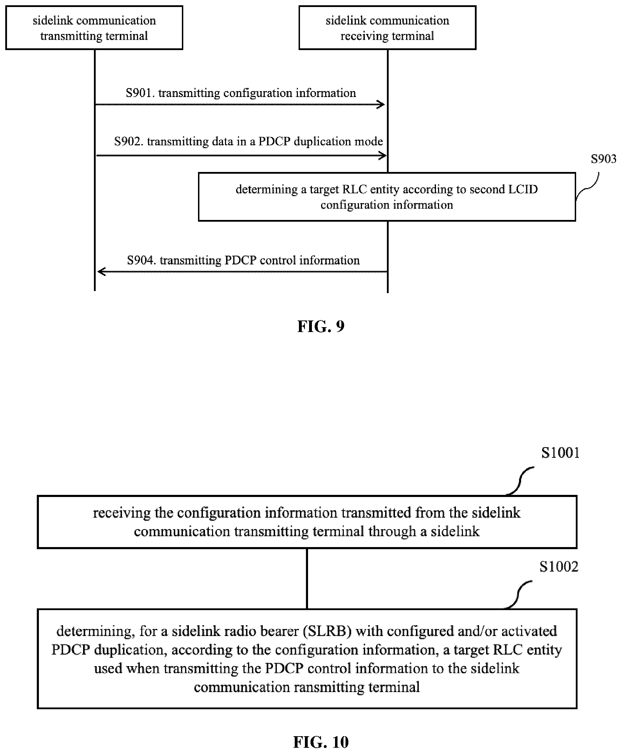

In some other embodiments, as shown in FIG. 9, the method may include the following steps.

Step S901: the sidelink communication transmitting terminal transmits configuration information to the sidelink communication receiving terminal.

The configuration information is used to assist the sidelink communication receiving terminal to determine the target RLC entity used when transmitting the PDCP control information to the sidelink communication transmitting terminal for the SLRB with configured and/or activated PDCP duplication.

In some embodiments, the configuration information may include second LCID configuration information. The second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

Step S902: the sidelink communication transmitting terminal transmits data to the sidelink communication receiving terminal in a PDCP duplication mode.

For the SLRB that uses the PDCP duplication, data of its corresponding different RLC entities are transmitted through different sidelink interface carriers and/or BWPs respectively. Specifically, the sidelink interface transmitting terminal may divide the sidelink interface carriers and/or BWPs into groups with the same number as the number of PDCP duplication transmission paths based on its own implementation or network configuration. Taking a division into two groups as an example, for the SLRB with activated the PDCP duplication, one of RLC logical channels uses one group of sidelink interface carriers and/or BWP sets; and the other of the RLC logical channels uses the other group of the sidelink interface carriers and/or BWP sets. A mapping relationship between the sidelink interface carriers and/or BWPs used by the RLC logical channel and the RLC logical channel is not fixed and may be selected by the transmitting terminal itself.

Step S903, the sidelink communication receiving terminal determines a target RLC entity according to the second LCID configuration information.

The target RLC entity refers to the RLC entity used when the sidelink communication receiving terminal transmits the PDCP control information to the sidelink communication transmitting terminal.

In some embodiments, an RLC entity corresponding to an LCID contained in the second LCID configuration information may be used as a target RLC entity.

In some other embodiments, a set of LCIDs used by all transmission paths for PDCP duplication is determined according to a correlation between the LCIDs used by each transmission path used by the sidelink interface for the PDCP duplication, and the LCID indicated in the second LCID configuration information. The correlation between the LCIDs used by each transmission path used by the sidelink interface for the PDCP duplication is stipulated by a protocol, pre-configured or configured by the network for the sidelink communication receiving terminal. The sidelink communication receiving terminal selects an LCID from the set of LCIDs according to a preset rule, and uses an RLC entity corresponding to the selected LCID as a target RLC entity. The above preset rule may include any one of the following:
random selection;
selecting an LCID with a largest or smallest number according to a number of each LCID;
selecting an LCID corresponding to the primary path;
or, selecting an LCID corresponding to the secondary path.

Step S904, the sidelink communication receiving terminal transmits PDCP control information to the sidelink communication transmitting terminal through the target RLC entity.

The sidelink communication receiving terminal delivers the PDCP control information to the target RLC entity and further delivers it to a bottom layer for data transmitting. The sidelink communication transmitting terminal receives the PDCP control information from the sidelink interface.

In the method for transmitting the control information through the sidelink interface provided by the embodiment of the present disclosure, the sidelink communication receiving terminal may receive the configuration information transmitted from the sidelink communication transmitting terminal through the sidelink interface, and determine, for the SLRB with configured and/or activated PDCP duplication, according to the configuration information, the target RLC entity used when transmitting the PDCP control information to the sidelink communication transmitting terminal, thus, it may be ensured that the PDCP control information is transmitted to the sidelink communication transmitting terminal in time through an appropriate RLC entity, and it is ensured that the transmission path of the PDCP control information is unique in a case of the PDCP duplication when a PDCP corresponds to a plurality of RLC entities.

Based on the same inventive concept, an embodiment of the present disclosure provides a method for transmitting control information through a sidelink interface, executed by a sidelink communication receiving terminal, and as shown in FIG. 10, the method may include the following steps.

Step S1001, receiving configuration information transmitted from a sidelink communication transmitting terminal through the sidelink interface.

Step S1002, for a sidelink radio bearer (SLRB) with configured and/or activated PDCP duplication, according to the configuration information, determining a target RLC entity used when transmitting the PDCP control information to the sidelink communication transmitting terminal.

Based on the same inventive concept, an embodiment of the present disclosure provides a method for transmitting control information through a sidelink interface, executed by a sidelink communication transmitting terminal, and the method may include the following steps.

Configuration information is transmitted to a sidelink communication receiving terminal through the sidelink interface. The configuration information is used to assist the sidelink communication receiving terminal to determine a target RLC entity used when transmitting the PDCP control information to the sidelink communication transmitting terminal for an SLRB with configured and/or activated PDCP duplication.

In an optional embodiment, the configuration information includes any of following information:
first resource set configuration information, wherein the first resource set configuration information is used to configure, for a sidelink interface target L2 destination, a sidelink interface carrier set and/or sidelink interface band width part (BWP) set to be used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set to be used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first LCID configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

In an optional embodiment, the sidelink interface target L2 destination is an target L2 destination of the sidelink communication receiving terminal.

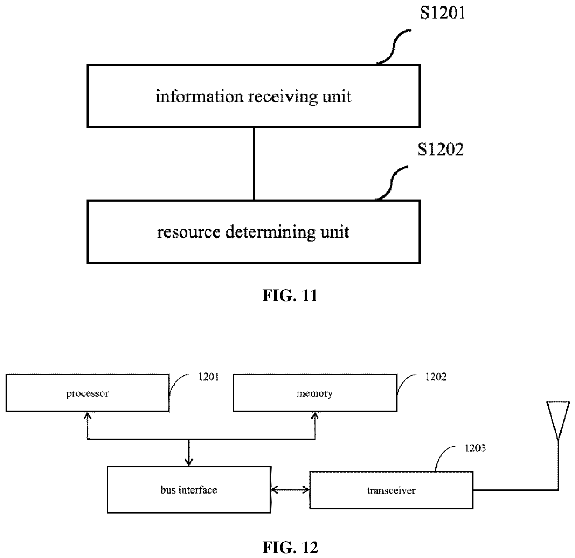

In an optional embodiment, after transmitting the configuration information to the sidelink communication receiving terminal through the sidelink interface, the method further includes:
receiving PDCP control information transmitted from the sidelink communication receiving terminal using the target RLC entity. Based on the same inventive concept, an embodiment of the present disclosure further provides a terminal which may be a sidelink communication receiving terminal. As shown in FIG. 11, the terminal may include an information receiving unit 1101 and a resource determining unit 1102; wherein:
the information receiving unit 1101 is configured to receive configuration information transmitted from a sidelink communication transmitting terminal through a sidelink interface; and
the resource determining unit 1102 is configured to determine, for an SLRB with configured and/or activated packet data convergence protocol (PDCP) duplication, according to the configuration information, a target RLC entity used when transmitting PDCP control information to the sidelink communication transmitting terminal.

In an optional embodiment, the configuration information includes any of following information:
first resource set configuration information, wherein the first resource set configuration information is used to configure, for a sidelink interface target L2 destination, a sidelink interface carrier set and/or sidelink interface band width part (BWP) set to be used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set to be used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first logical channel identify (LCID) configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

In an optional embodiment, the sidelink interface target L2 destination is an target L2 destination of the sidelink communication receiving terminal.

In an optional embodiment, in the case that the configuration information includes the first resource set configuration information or the second resource set configuration information, the resource determining unit 1102 may be specifically configured to:
determine a target transmission resource according to the configuration information; wherein the target transmission resource refers to a carrier set and/or BWP set used for transmitting the PDCP control information; and
determine an LCID used when the sidelink communication transmitting terminal transmits data of the SLRB with configured and/or activated PDCP duplication utilizing the target transmission resource, and determine an RLC entity corresponding to the LCID as the target RLC entity used when the sidelink communication receiving terminal transmits the PDCP control information to the sidelink communication transmitting terminal.

In an optional embodiment, the resource determining unit 1102 may be specifically configured to:
use, in the case that the configuration information includes the first resource set configuration information, the sidelink interface carrier set and/or the sidelink interface BWP set configured for the sidelink interface target L2 destination as the target transmission resource; or,
use, in the case that the configuration information includes the second resource set configuration information, the sidelink interface carrier set and/or the sidelink interface BWP set configured for the SLRB belonging to the sidelink interface target L2 destination as the target transmission resource.

In an optional embodiment, in the case that the configuration information is the third resource set configuration information, it is stipulated, by a protocol, that the PDCP control information is transmitted through a primary path or a secondary path for the SLRB with configured and/or activated PDCP duplication.

In an optional embodiment, in the case that the configuration information includes the third resource set configuration information, and it is stipulated, by the protocol, that the PDCP control information is transmitted through the primary path for the SLRB with configured and/or activated PDCP duplication, the resource determining unit 1102 may be specifically configured to:
determine a sidelink interface carrier set and/or sidelink interface BWP set corresponding to the primary path according to the third resource set configuration information; and
determine an LCID used when the sidelink communication transmitting terminal transmits data of the SLRB with configured and/or activated PDCP duplication utilizing the sidelink interface carrier set and/or the sidelink interface BWP set corresponding to the primary path, and determine an RLC entity corresponding to the LCID as the target RLC entity used when the sidelink communication receiving terminal transmits the PDCP control information to the sidelink communication transmitting terminal.

In an optional embodiment, in the case that the configuration information includes the third resource set configuration information, and it is stipulated, by the protocol, that the PDCP control information is transmitted through the secondary path for the SLRB with configured and/or activated PDCP duplication, the resource determining unit 1102 may be specifically configured to:
determine a sidelink interface carrier set and/or sidelink interface BWP set corresponding to the secondary path according to the third resource set configuration information; and
determine an LCID used when the sidelink communication transmitting terminal transmits data of the SLRB with configured and/or activated PDCP duplication utilizing the sidelink interface carrier set and/or the sidelink interface BWP set corresponding to the secondary path, and determine an RLC entity corresponding to the LCID as the target RLC entity used when the sidelink communication receiving terminal transmits the PDCP control information to the sidelink communication transmitting terminal.

In an optional embodiment, in the case that the configuration information includes the first LCID configuration information, the resource determining unit 1102 may be specifically configured to:
determine an RLC entity corresponding to an LCID contained in the first LCID configuration information as the target RLC entity used when the sidelink communication receiving terminal transmits the PDCP control information to the sidelink communication transmitting terminal.

In an optional embodiment, in the case that the configuration information includes the second LCID configuration information, the resource determining unit 1102 may be specifically configured to:
determine an RLC entity corresponding to an LCID contained in the second LCID configuration information as the target RLC entity used when the sidelink communication receiving terminal transmits the PDCP control information to the sidelink communication transmitting terminal; or,
determine a set of LCIDs used by all transmission paths for PDCP duplication according to a correlation between the LCIDs used by each transmission path used by the sidelink interface for the PDCP duplication, and the LCID indicated in the second LCID configuration information; and select an LCID from the set of LCIDs according to a preset rule, and determine an RLC entity corresponding to the selected LCID as the target RLC entity used when the sidelink communication receiving terminal transmits the PDCP control information to the sidelink communication transmitting terminal.

In an optional embodiment, the correlation between the LCIDs used by each transmission path used by the sidelink interface for the PDCP duplication is stipulated by a protocol, pre-configured or configured by the network for the sidelink communication receiving terminal.

In an optional embodiment, the preset rule includes any one of the following:
random selection;
selecting an LCID with a largest or smallest number according to a number of each LCID;
selecting an LCID corresponding to the primary path; and
selecting an LCID corresponding to the secondary path.

Based on the same inventive concept, an embodiment of the present disclosure further provides a terminal which may be a sidelink communication transmitting terminal. The terminal may include an information transmitting unit.

The information transmitting unit is configured to transmit configuration information to a sidelink communication receiving terminal through a sidelink interface; wherein the configuration information is used to assist the sidelink communication receiving terminal to determine a target radio link control (RLC) entity used when transmitting PDCP control information to the sidelink communication transmitting terminal for a sidelink radio bearer (SLRB) with configured and/or activated PDCP duplication.

In an optional embodiment, the information transmitting unit may further be configured to receive PDCP control information transmitted from the sidelink communication receiving terminal using the target RLC entity after transmitting the configuration information to the sidelink communication receiving terminal through the sidelink interface.

Based on the same inventive concept, an embodiment of the present disclosure further provides a terminal. FIG. 12 shows a schematic structural diagram of a terminal provided by an embodiment of the present disclosure. As shown in FIG. 12, the terminal includes a processor 1201, a memory 1202, and a transceiver 1203. For example, the terminal may be used as a sidelink communication transmitting terminal or as a sidelink communication receiving terminal.

The processor 1201 is responsible for managing the bus architecture and general processing, and the memory 1202 may store data used when the processor 1201 executes operations. The transceiver 1203 is configured to receive and transmit data under the control of the processor 1201.

The bus architecture may include interconnected buses of any number and bridges of any number, which are specifically linked together through various circuits of one or more processors represented by the processor 1201 and various circuits of memories represented by the memory 1202. The bus architecture may also link various other circuits such as peripheral devices, voltage regulators, and power management circuits, which are well known in the art, and therefore are not further described herein. A bus interface provides an interface. The processor 1201 is responsible for managing the bus architecture and general processing, and the memory 1202 may store data used when the processor 1201 executes operations.

A flow disclosed in the embodiment of the present disclosure may be applied to the processor 1201 or implemented by the processor 1201. During an implementation process, all steps of a signal processing flow may be completed by an integrated logic circuit of hardware or an instruction in the form of software in the processor 1201. The processor 1201 may be a general-purpose processor, a digital signal processor, an application specific integrated circuit, a field programmable gate array or other programmable logic devices, a discrete gate or a transistor logic device, or a discrete hardware component, and may implement or execute methods, steps and logic block diagrams disclosed in the embodiments of the present disclosure. The general-purpose processor may be a microprocessor, or any conventional processor, etc. The steps of the method disclosed in conjunction with the embodiment of the present disclosure may be directly embodied to be executed and completed by a hardware processor, or may be executed and completed through a combination of hardware and software modules in the processor. The software module may be located in a mature storage medium in the art, such as a random access memory, a flash memory, a read-only memory, a programmable read-only memory, an electrically erasable programmable memory, and a register. The storage medium is located in the memory 1202, and the processor 1201 reads information in the memory 1202, and completes the steps of the signal processing flow in combination with its hardware.

In some embodiments, the terminal shown in FIG. 12 may be a sidelink communication transmitting terminal. The processor 1201 is configured to read a computer instruction in the memory 1202. The processor 1201, when executing the computer instruction, realizes the following:
controlling the transceiver 1203 to receive configuration information transmitted from a sidelink communication transmitting terminal through a sidelink interface; and
determining, for a sidelink radio bearer (SLRB) with configured and/or activated packet data convergence protocol (PDCP) duplication, according to the configuration information, a target radio link control (RLC) entity used when transmitting PDCP control information to the sidelink communication transmitting terminal.

In an optional embodiment, the configuration information includes any of following information:
first resource set configuration information, wherein the first resource set configuration information is used to configure, for a sidelink interface target L2 destination, a sidelink interface carrier set and/or sidelink interface band width part (BWP) set to be used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set to be used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first logical channel identify (LCID) configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

In an optional embodiment, the sidelink interface target L2 destination is an target L2 destination of the sidelink communication receiving terminal.

In an optional embodiment, in the case that the configuration information includes the first resource set configuration information or the second resource set configuration information, the processor is specifically configured to:
determine a target transmission resource according to the configuration information; wherein the target transmission resource refers to a carrier set and/or BWP set used for transmitting the PDCP control information; and
determine an LCID used when the sidelink communication transmitting terminal transmits data of the SLRB with configured and/or activated PDCP duplication utilizing the target transmission resource, and determine an RLC entity corresponding to the LCID as the target RLC entity used when the sidelink communication receiving terminal transmits the PDCP control information to the sidelink communication transmitting terminal.

In an optional embodiment, the processor is specifically configured to:
use, in the case that the configuration information includes the first resource set configuration information, the sidelink interface carrier set and/or the sidelink interface BWP set configured for the sidelink interface target destination as the target transmission resource; or,
use, in the case that the configuration information includes the second resource set configuration information, the sidelink interface carrier set and/or the sidelink interface BWP set configured for the SLRB belonging to the sidelink interface target L2 destination as the target transmission resource.

In an optional embodiment, in the case that the configuration information is the third resource set configuration information, it is further included that it is stipulated, by a protocol, that the PDCP control information is transmitted through a primary path or a secondary path for the SLRB with configured and/or activated PDCP duplication.

In an optional embodiment, in the case that the configuration information includes the third resource set configuration information, and it is stipulated, by the protocol, that the PDCP control information is transmitted through the primary path for the SLRB with configured and/or activated PDCP duplication, the processor is specifically configured to:
determine a sidelink interface carrier set and/or sidelink interface BWP set corresponding to the primary path according to the third resource set configuration information; and
determine an LCID used when the sidelink communication transmitting terminal transmits data of the SLRB with configured and/or activated PDCP duplication utilizing the sidelink interface carrier set and/or the sidelink interface BWP set corresponding to the primary path, and determine an RLC entity corresponding to the LCID as the target RLC entity used when the sidelink communication receiving terminal transmits the PDCP control information to the sidelink communication transmitting terminal.

In an optional embodiment, in the case that the configuration information includes the third resource set configuration information, and it is stipulated, by the protocol, that the PDCP control information is transmitted through the secondary path for the SLRB with configured and/or activated PDCP duplication, the processor 1201 is specifically configured to:
determine a sidelink interface carrier set and/or sidelink interface BWP set corresponding to the secondary path according to the third resource set configuration information; and
determine an LCID used when the sidelink communication transmitting terminal transmits data of the SLRB with configured and/or activated PDCP duplication utilizing the sidelink interface carrier set and/or the sidelink interface BWP set corresponding to the secondary path, and determine an RLC entity corresponding to the LCID as the target RLC entity used when the sidelink communication receiving terminal transmits the PDCP control information to the sidelink communication transmitting terminal.

In an optional embodiment, in the case that the configuration information includes the first LCID configuration information, the processor 1201 is specifically configured to:
determine an RLC entity corresponding to an LCID contained in the first LCID configuration information as the target RLC entity used when the sidelink communication receiving terminal transmits the PDCP control information to the sidelink communication transmitting terminal.

In an optional embodiment, in the case that the configuration information includes the second LCID configuration information, the processor 1201 is specifically configured to:
determine an RLC entity corresponding to an LCID contained in the second LCID configuration information as the target RLC entity used when the sidelink communication receiving terminal transmits the PDCP control information to the sidelink communication transmitting terminal; or,
determine a set of LCIDs used by all transmission paths for PDCP duplication according to a correlation between the LCIDs used by each transmission path used by the sidelink interface for the PDCP duplication, and the LCID indicated in the second LCID configuration information; and select an LCID from the set of LCIDs according to a preset rule, and determine an RLC entity corresponding to the selected LCID as the target RLC entity used when the sidelink communication receiving terminal transmits the PDCP control information to the sidelink communication transmitting terminal.

In an optional embodiment, the correlation between the LCIDs used by each transmission path used by the sidelink interface for the PDCP duplication is stipulated by a protocol, pre-configured or configured by the network for the sidelink communication receiving terminal.

In an optional embodiment, the preset rule includes any one of the following:
random selection;
selecting an LCID with a largest or smallest number according to a number of each LCID;
selecting an LCID corresponding to the primary path; and
selecting an LCID corresponding to the secondary path.

In some other embodiments, the terminal shown in FIG. 12 may be a sidelink communication transmitting terminal. The processor 1201 is configured to read a computer instruction in the memory 1202. The processor 1201, when executing the computer instruction, implements the following:
controlling the transceiver to transmit configuration information to a sidelink communication receiving terminal through a sidelink interface; wherein the configuration information is used to assist the sidelink communication receiving terminal to determine a target radio link control (RLC) entity used when transmitting PDCP control information to the sidelink communication transmitting terminal for a sidelink radio bearer (SLRB) with configured and/or activated PDCP duplication.

In an optional embodiment, the configuration information includes any of following information:
first resource set configuration information, wherein the first resource set configuration information is used to configure, for a sidelink interface target L2 destination, a sidelink interface carrier set and/or sidelink interface band width part (BWP) set to be used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set to be used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first logical channel identify (LCID) configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

In an optional embodiment, the sidelink interface target L2 destination is an target L2 destination of the sidelink communication receiving terminal.

In an optional embodiment, the processor 1201 is further configured to:
receive PDCP control information transmitted from the sidelink communication receiving terminal using the target RLC entity after transmitting the configuration information to the sidelink communication receiving terminal through the sidelink interface.

Based on the same inventive concept, an embodiment of the present disclosure provides a computer readable storage medium, storing a computer instruction. The computer instruction, when executed by a processor, implements any of the above methods for transmitting the control information through the sidelink interface.

Those of skill in the art will appreciate that the embodiments of the present disclosure may be provided as methods, systems, or computer program products. Therefore, the present disclosure may take the form of a full hardware embodiment, a full software embodiment, or an embodiment combining software and hardware. Besides, the present disclosure may adopt the form of a computer program product implemented on one or more computer available storage media (including but not limited to a disk memory, a CD-ROM, an optical memory and the like) containing computer available program codes.

The present disclosure is described with reference to the flowcharts and/or block diagrams of the method, apparatus (system), and computer program product according to the present disclosure. It should be understood that each flow and/or block in the flowcharts and/or block diagrams and the combination of flows and/or blocks in the flowcharts and/or block diagrams can be implemented by computer program instructions. These computer program instructions can be provided to processors of a general-purpose computer, a special-purpose computer, an embedded processor or other programmable data processing devices to generate a machine, so that instructions executed by processors of a computer or other programmable data processing devices generate an apparatus for implementing the functions specified in one or more flows of the flowcharts and/or one or more blocks of the block diagrams.

These computer program instructions can also be stored in a computer-readable memory capable of guiding a computer or other programmable data processing devices to work in a specific manner, so that instructions stored in the computer-readable memory generate a manufacturing product including an instruction apparatus, and the instruction apparatus implements the functions specified in one or more flows of the flowcharts and/or one or more blocks of the block diagrams.

These computer program instructions can also be loaded on a computer or other programmable data processing devices, so that a series of operation steps are executed on the computer or other programmable devices to produce computer-implemented processing, and thus, the instructions executed on the computer or other programmable devices provide steps for implementing the functions specified in one or more flows of the flowcharts and/or one or more blocks of the block diagrams.
Apparently, those of skill in the art can make various modifications and variations to the present disclosure without departing from the spirit and scope of the present disclosure. In this way, under the condition that these modifications and variations of the present disclosure fall within the scope of the claims of the present disclosure and their equivalent technologies, the present disclosure is also intended to include these modifications and variations.

## Claims

1. A method for transmitting control information through a sidelink interface, applied to a sidelink communication receiving terminal, **characterized by** comprising:
receiving configuration information transmitted from a sidelink communication transmitting terminal through a sidelink interface; and
for a sidelink radio bearer (SLRB) with configured and/or activated packet data convergence protocol (PDCP) duplication, determining, according to the configuration information, a target radio link control (RLC) entity used when transmitting PDCP control information to the sidelink communication transmitting terminal.

2. The method according to claim 1, **characterized in that** the configuration information comprises any of following information:
first resource set configuration information, wherein the first resource set configuration information is used to configure, for a sidelink interface target L2 destination, a sidelink interface carrier set and/or sidelink interface band width part (BWP) set to be used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first logical channel identify (LCID) configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

3. The method according to claim 2, **characterized in that** the sidelink interface target L2 destination is an target L2 destination of the sidelink communication receiving terminal.

4. The method according to claim 2 or 3, **characterized in that** in the case that the configuration information comprises the first resource set configuration information or the second resource set configuration information, determining, according to the configuration information, the target RLC entity used when PDCP control information is transmitted to the sidelink communication transmitting terminal comprises:
determining a target transmission resource according to the configuration information; wherein the target transmission resource refers to a carrier set and/or BWP set used for transmitting the PDCP control information; and
determining an LCID used when the sidelink communication transmitting terminal transmits data of the SLRB with configured and/or activated PDCP duplication utilizing the target transmission resource, and taking an RLC entity corresponding to the LCID as the target RLC entity used when the sidelink communication receiving terminal transmits the PDCP control information to the sidelink communication transmitting terminal.

5. The method according to claim 4, **characterized in that** the determining a target transmission resource according to the configuration information comprises:
in the case that the configuration information comprises the first resource set configuration information, determining the sidelink interface carrier set and/or sidelink interface BWP set configured for the sidelink interface target L2 destination as the target transmission resource; or,
in the case that the configuration information comprises the second resource set configuration information, determining the sidelink interface carrier set and/or sidelink interface BWP set configured for the SLRB belonging to the sidelink interface target L2 destination as the target transmission resource.

6. The method according to claim 2 or 3, **characterized in that** in the case that the configuration information is the third resource set configuration information, the method further comprises:
stipulating, by a protocol, that the PDCP control information is transmitted through the primary path or the secondary path for the SLRB with configured and/or activated PDCP duplication.

7. The method according to claim 6, **characterized in that** in the case that the configuration information comprises the third resource set configuration information, and it is stipulated, by the protocol, that the PDCP control information is transmitted through the primary path for the SLRB with configured and/or activated PDCP duplication, the determining, according to the configuration information, the target RLC entity used when PDCP control information is transmitted to the sidelink communication transmitting terminal comprises:
determining a sidelink interface carrier set and/or sidelink interface BWP set corresponding to the primary path according to the third resource set configuration information; and
determining an LCID used when the sidelink communication transmitting terminal transmits data of the SLRB with configured and/or activated PDCP duplication utilizing the sidelink interface carrier set and/or sidelink interface BWP set corresponding to the primary path, and determining an RLC entity corresponding to the LCID as the target RLC entity used when the sidelink communication receiving terminal transmits the PDCP control information to the sidelink communication transmitting terminal.

8. The method according to claim 6, **characterized in that** in the case that the configuration information comprises the third resource set configuration information, and it is stipulated, by the protocol, that the PDCP control information is transmitted through the secondary path for the SLRB with configured and/or activated PDCP duplication, the determining, according to the configuration information, the target RLC entity used when PDCP control information is transmitted to the sidelink communication transmitting terminal comprises:
determining a sidelink interface carrier set and/or sidelink interface BWP set corresponding to the secondary path according to the third resource set configuration information; and
determining an LCID used when the sidelink communication transmitting terminal transmits data of the SLRB with configured and/or activated PDCP duplication utilizing the sidelink interface carrier set and/or sidelink interface BWP set corresponding to the secondary path, and determining an RLC entity corresponding to the LCID as the target RLC entity used when the sidelink communication receiving terminal transmits the PDCP control information to the sidelink communication transmitting terminal.

9. The method according to claim 2 or 3, **characterized in that** in the case that the configuration information comprises the first LCID configuration information, the determining, according to the configuration information, the target RLC entity used when PDCP control information is transmitted to the sidelink communication transmitting terminal comprises:
determining an RLC entity corresponding to an LCID contained in the first LCID configuration information as the target RLC entity used when the sidelink communication receiving terminal transmits the PDCP control information to the sidelink communication transmitting terminal.

10. The method according to claim 2 or 3, **characterized in that** in the case that the configuration information comprises the second LCID configuration information, determining, according to the configuration information, the target RLC entity used for transmitting first PDCP control information to the transmitting terminal comprises:
determining an RLC entity corresponding to an LCID contained in the second LCID configuration information as the target RLC entity used when the sidelink communication receiving terminal transmits the PDCP control information to the sidelink communication transmitting terminal; or,
determining a set of LCIDs used by all transmission paths for PDCP duplication according to a correlation between the LCIDs used by each transmission path used by the sidelink interface for the PDCP duplication, and the LCID indicated in the second LCID configuration information; and selecting an LCID from the set of LCIDs according to a preset rule, and determining an RLC entity corresponding to the selected LCID as the target RLC entity used when the sidelink communication receiving terminal transmits the PDCP control information to the sidelink communication transmitting terminal.

11. The method according to claim 10, **characterized in that** the correlation between the LCIDs used by each transmission path used by the sidelink interface for the PDCP duplication is stipulated by a protocol, pre-configured or configured by the network for the sidelink communication receiving terminal.

12. The method according to claim 10, **characterized in that** the preset rule comprises any one of the following:
random selection;
selecting an LCID with a largest or smallest number according to a number of each LCID;
selecting an LCID corresponding to the primary path; and
selecting an LCID corresponding to the secondary path.

13. A method for transmitting control information through a sidelink interface, applied to a sidelink communication transmitting terminal, **characterized by** comprising:
transmitting configuration information to a sidelink communication receiving terminal through the sidelink interface; wherein the configuration information is used to assist the sidelink communication receiving terminal to determine a target radio link control (RLC) entity used when transmitting PDCP control information to the sidelink communication transmitting terminal for a sidelink radio bearer (SLRB) with configured and/or activated PDCP duplication.

14. The method according to claim 13, **characterized in that** the configuration information comprises any of following information:
first resource set configuration information, wherein the first resource set configuration information is used to configure, for a sidelink interface target L2 destination, a sidelink interface carrier set and/or sidelink interface band width part (BWP) set used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first LCID configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

15. The method according to claim 14, **characterized in that** the sidelink interface target L2 destination is an target L2 destination of the sidelink communication receiving terminal.

16. The method according to any one of claims 13-15, **characterized in that** after transmitting configuration information to a sidelink communication receiving terminal through the sidelink interface, the method further comprises:
receiving PDCP control information transmitted from the sidelink communication receiving terminal using the target RLC entity.

17. A terminal, wherein the terminal is a sidelink communication receiving terminal, and **characterized in that** the terminal comprises:
an information receiving unit, configured to receive configuration information transmitted from a sidelink communication transmitting terminal through a sidelink interface; and
a resource determining unit, configured to determine, for a sidelink radio bearer (SLRB) with configured and/or activated packet data convergence protocol (PDCP) duplication, according to the configuration information, a target radio link control (RLC) entity used when transmitting PDCP control information to the sidelink communication transmitting terminal.

18. The terminal according to claim 17, **characterized in that** the configuration information comprises any of following information:
first resource set configuration information, wherein the first resource set configuration information is used to configure, for a sidelink interface target L2 destination, a sidelink interface carrier set and/or sidelink interface band width part (BWP) set used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first logical channel identify (LCID) configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

19. The terminal according to claim 18, **characterized in that** the sidelink interface target L2 destination is an target L2 destination of the sidelink communication receiving terminal.

20. The terminal according to claim 18 or 19, **characterized in that** in the case that the configuration information comprises the first resource set configuration information or the second resource set configuration information, the resource determining unit is configured to:
determine a target transmission resource according to the configuration information; wherein the target transmission resource refers to a carrier set and/or BWP set used for transmitting the PDCP control information; and
determine an LCID to be used when the sidelink communication transmitting terminal transmits data of the SLRB with configured and/or activated PDCP duplication utilizing the target transmission resource, and determining an RLC entity corresponding to the LCID as the target RLC entity used when the sidelink communication receiving terminal transmits the PDCP control information to the sidelink communication transmitting terminal.

21. The terminal according to claim 20, **characterized in that** the resource determining unit is configured to:
determine, in the case that the configuration information comprises the first resource set configuration information, the sidelink interface carrier set and/or sidelink interface BWP set configured for the sidelink interface target destination as the target transmission resource; or,
determine, in the case that the configuration information comprises the second resource set configuration information, the sidelink interface carrier set and/or sidelink interface BWP set configured for the SLRB belonging to the sidelink interface target L2 destination as the target transmission resource.

22. The terminal according to claim 18 or 19, **characterized in that** in the case that the configuration information is the third resource set configuration information, the method further comprises: stipulating, by a protocol, that the PDCP control information is transmitted through the primary path or the secondary path for the SLRB with configured and/or activated PDCP duplication.

23. The terminal according to claim 22, **characterized in that** in the case that the configuration information comprises the third resource set configuration information, and it is stipulated, by the protocol, that the PDCP control information is transmitted through the primary path for the SLRB with configured and/or activated PDCP duplication, the resource determining unit is configured to:
determine a sidelink interface carrier set and/or sidelink interface BWP set corresponding to the primary path according to the third resource set configuration information; and
determine an LCID used when the sidelink communication transmitting terminal transmits data of the SLRB with configured and/or activated PDCP duplication utilizing the sidelink interface carrier set and/or sidelink interface BWP set corresponding to the primary path, and determine an RLC entity corresponding to the LCID as the target RLC entity used when the sidelink communication receiving terminal transmits the PDCP control information to the sidelink communication transmitting terminal.

24. The terminal according to claim 22, **characterized in that** in the case that the configuration information comprises the third resource set configuration information, and it is stipulated, by the protocol, that the PDCP control information is transmitted through the secondary path for the SLRB with configured and/or activated PDCP duplication, the resource determining unit is configured to:
determine a sidelink interface carrier set and/or sidelink interface BWP set corresponding to the secondary path according to the third resource set configuration information; and
determine an LCID used when the sidelink communication transmitting terminal transmits data of the SLRB with configured and/or activated PDCP duplication utilizing the sidelink interface carrier set and/or sidelink interface BWP set corresponding to the secondary path, and determine an RLC entity corresponding to the LCID as the target RLC entity used when the sidelink communication receiving terminal transmits the PDCP control information to the sidelink communication transmitting terminal.

25. The terminal according to claim 18 or 19, **characterized in that** in the case that the configuration information comprises the first LCID configuration information, the resource determining unit is configured to:
determine an RLC entity corresponding to an LCID contained in the first LCID configuration information as the target RLC entity used when the sidelink communication receiving terminal transmits the PDCP control information to the sidelink communication transmitting terminal.

26. The terminal according to claim 18 or 19, **characterized in that** in the case that the configuration information comprises the second LCID configuration information, the resource determining unit is configured to:
determine an RLC entity corresponding to an LCID contained in the second LCID configuration information as the target RLC entity used when the sidelink communication receiving terminal transmits the PDCP control information to the sidelink communication transmitting terminal; or,
determine a set of LCIDs used by all transmission paths for a PDCP duplication according to a correlation between the LCIDs used by each transmission path used by the sidelink interface for the PDCP duplication, and the LCID indicated in the second LCID configuration information; and select an LCID from the set of LCIDs according to a preset rule, and determine an RLC entity corresponding to the selected LCID as the target RLC entity used when the sidelink communication receiving terminal transmits the PDCP control information to the sidelink communication transmitting terminal.

27. The terminal according to claim 26, **characterized in that** the correlation between the LCIDs used by each transmission path used by the sidelink interface for the PDCP duplication is stipulated by a protocol, pre-configured or configured by network for the sidelink communication receiving terminal.

28. The terminal according to claim 26, **characterized in that** the preset rule comprises any one of the following:
random selection;
selecting an LCID with a largest or smallest number according to a number of each LCID;
selecting an LCID corresponding to the primary path; and
selecting an LCID corresponding to the secondary path.

29. A terminal, wherein the terminal is a sidelink communication transmitting terminal, and **characterized in that** the terminal comprises:
an information transmitting unit, configured to transmit configuration information to a sidelink communication receiving terminal through a sidelink interface; wherein the configuration information is used to assist the sidelink communication receiving terminal to determine a target radio link control (RLC) entity used when transmitting PDCP control information to the sidelink communication transmitting terminal for a sidelink radio bearer (SLRB) with configured and/or activated a PDCP duplication.

30. The terminal according to claim 29, **characterized in that** the information transmitting unit is further configured to:
receive PDCP control information transmitted from the sidelink communication receiving terminal using the target RLC entity after transmitting the configuration information to the sidelink communication receiving terminal through the sidelink interface.

31. A terminal, wherein the terminal is a sidelink communication receiving terminal, **characterized in that** the terminal comprises: a memory, a transceiver, and a processor;
the memory is configured to store a computer instruction;
the transceiver is configured to receive and transmit data under control of the processor; and
the processor is configured to read a computer program in the memory and execute following operations:
controlling the transceiver to receive configuration information transmitted from a sidelink communication transmitting terminal through a sidelink interface; and
determining, for a sidelink radio bearer (SLRB) with configured and/or activated packet data convergence protocol (PDCP) duplication, according to the configuration information, a target radio link control (RLC) entity used when transmitting PDCP control information to the sidelink communication transmitting terminal.

32. The terminal according to claim 31, **characterized in that** the configuration information comprises any of following information:
first resource set configuration information, wherein the first resource set configuration information is used to configure, for a sidelink interface target L2 destination, a sidelink interface carrier set and/or sidelink interface band width part (BWP) set used when the sidelink communication receiving terminal transmits the PDCP control information to the sidelink communication transmitting terminal;
second resource set configuration information, wherein the second resource set configuration information is used to configure, for an SLRB belonging to the sidelink interface target L2 destination, a sidelink interface carrier set and/or sidelink interface BWP set used when the sidelink communication receiving terminal transmits PDCP control information corresponding to the SLRB to the sidelink communication transmitting terminal;
third resource set configuration information, wherein the third resource set configuration information is used to configure, for the sidelink interface target L2 destination, a sidelink interface carrier set and/or sidelink interface BWP set used by a primary path and/or a secondary path corresponding to the PDCP duplication;
first logical channel identify (LCID) configuration information, wherein the first LCID configuration information is used to configure, for the SLRB belonging to the sidelink interface target L2 destination, an LCID used when the sidelink communication receiving terminal transmits the PDCP control information corresponding to the SLRB to the sidelink communication transmitting terminal; and
second LCID configuration information, wherein the second LCID configuration information is used to configure, for the SLRB belonging to the sidelink interface target L2 destination, an LCID corresponding to at least one duplication path when the sidelink communication receiving terminal transmits the PDCP control information corresponding to the SLRB to the sidelink communication transmitting terminal.

33. The terminal according to claim 32, **characterized in that** the sidelink interface target L2 destination is an target L2 destination of the sidelink communication receiving terminal.

34. The terminal according to claim 32 or 33, **characterized in that** in the case that the configuration information comprises the first resource set configuration information or the second resource set configuration information, the processor is configured to:
determine a target transmission resource according to the configuration information; wherein the target transmission resource refers to a carrier set and/or BWP set used for transmitting the PDCP control information; and
determine an LCID used when the sidelink communication transmitting terminal transmits data of the SLRB with configured and/or activated PDCP duplication utilizing the target transmission resource, and determining an RLC entity corresponding to the LCID as the target RLC entity used when the sidelink communication receiving terminal transmits the PDCP control information to the sidelink communication transmitting terminal.

35. The terminal according to claim 34, **characterized in that** the processor is configured to:
determine, in the case that the configuration information comprises the first resource set configuration information, the sidelink interface carrier set and/or sidelink interface BWP set configured for the sidelink interface target destination as the target transmission resource; or,
determine, in the case that the configuration information comprises the second resource set configuration information, the sidelink interface carrier set and/or sidelink interface BWP set configured for the SLRB belonging to the sidelink interface target L2 destination as the target transmission resource.

36. The terminal according to claim 32 or 33, **characterized in that** in the case that the configuration information is the third resource set configuration information, the terminal further comprises: stipulating, by a protocol, that the PDCP control information is transmitted through the primary path or the secondary path for the SLRB with configured and/or activated PDCP duplication.

37. The terminal according to claim 36, **characterized in that** in the case that the configuration information comprises the third resource set configuration information, and it is stipulated, by the protocol, that the PDCP control information is transmitted through the primary path for the SLRB with configured and/or activated PDCP duplication, the processor is configured to:
determine a sidelink interface carrier set and/or sidelink interface BWP set corresponding to the primary path according to the third resource set configuration information; and
determine an LCID used when the sidelink communication transmitting terminal transmits data of the SLRB with configured and/or activated PDCP duplication utilizing the sidelink interface carrier set and/or sidelink interface BWP set corresponding to the primary path, and determine an RLC entity corresponding to the LCID as the target RLC entity used when the sidelink communication receiving terminal transmits the PDCP control information to the sidelink communication transmitting terminal.

38. The terminal according to claim 36, **characterized in that** in the case that the configuration information comprises the third resource set configuration information, and it is stipulated, by the protocol, that the PDCP control information is transmitted through the secondary path for the SLRB with configured and/or activated PDCP duplication, the processor is configured to:
determine a sidelink interface carrier set and/or sidelink interface BWP set corresponding to the secondary path according to the third resource set configuration information; and
determine an LCID used when the sidelink communication transmitting terminal transmits data of the SLRB with configured and/or activated PDCP duplication utilizing the sidelink interface carrier set and/or sidelink interface BWP set corresponding to the secondary path, and determine an RLC entity corresponding to the LCID as the target RLC entity used when the sidelink communication receiving terminal transmits the PDCP control information to the sidelink communication transmitting terminal.

39. The terminal according to claim 32 or 33, **characterized in that** in the case that the configuration information comprises the first LCID configuration information, the processor is configured to:
determine an RLC entity corresponding to an LCID contained in the first LCID configuration information as the target RLC entity used when the sidelink communication receiving terminal transmits the PDCP control information to the sidelink communication transmitting terminal.

40. The terminal according to claim 32 or 33, **characterized in that** in the case that the configuration information comprises the second LCID configuration information, the processor is configured to:
determine an RLC entity corresponding to an LCID contained in the second LCID configuration information as the target RLC entity used when the sidelink communication receiving terminal transmits the PDCP control information to the sidelink communication transmitting terminal; or,
determine a set of LCIDs used by all transmission paths for a PDCP duplication according to a correlation between the LCIDs used by each transmission path used by the sidelink interface for the PDCP duplication, and the LCID indicated in the second LCID configuration information; and select an LCID from the set of LCIDs according to a preset rule, and determine an RLC entity corresponding to the selected LCID as the target RLC entity used when the sidelink communication receiving terminal transmits the PDCP control information to the sidelink communication transmitting terminal.

41. The terminal according to claim 40, **characterized in that** the correlation between the LCIDs used by each transmission path used by the sidelink interface for the PDCP duplication is stipulated by a protocol, pre-configured or configured by network for the sidelink communication receiving terminal.

42. The terminal according to claim 40, **characterized in that** the preset rule comprises any one of the following:
random selection;
selecting an LCID with a largest or smallest number according to a number of each LCID;
selecting an LCID corresponding to the primary path; and
selecting an LCID corresponding to the secondary path.

43. A terminal, wherein the terminal is a sidelink communication transmitting terminal, **characterized in that** the terminal comprises: a memory, a transceiver, and a processor;
the memory is configured to store a computer instruction;
the transceiver is configured to receive and transmit data under control of the processor; and
the processor is configured to read a computer program in the memory and execute following operations:
controlling the transceiver to transmit configuration information to a sidelink communication receiving terminal through a sidelink interface; wherein the configuration information is used to assist the sidelink communication receiving terminal to determine a target radio link control (RLC) entity used when PDCP control information is transmitted to the sidelink communication transmitting terminal for a sidelink radio bearer (SLRB) with configured and/or activated a PDCP duplication.

44. The terminal according to claim 43, **characterized in that** the processor is further configured to:
receive PDCP control information transmitted from the sidelink communication receiving terminal using the target RLC entity after transmitting the configuration information to the sidelink communication receiving terminal through the sidelink interface.

45. A computer readable storage medium, storing a computer instruction, **characterized in that** the computer instruction, when executed by a processor, implements the method according to any one of claims 1-12 or the method according to any one of claims 13-16.
